# FASCICULE DE BREVET EUROPEEN

(11) **EP 1 584 829 B1**
(45) Date de publication et mention de la délivrance du brevet: **05.09.2012**
(21) Numéro de dépôt: 05290580.9
(22) Date de dépôt: 16.03.2005
(51) Int. Cl.: F16C 35/07, F16C 35/12, F16C 35/063, B61F 15/18

(54) **Montage de palier à roulement intégrant un moyen de diminution de la corrision de contact**
Montage eines Wälzlagers mit integrierter Vorrichtung zur Verminderung von Kontaktkorrosion
Roller bearing assembly having integrated means for the reduction of contact corrosion

(30) Priorité: 09.04.2004 FR 0450725
(43) Date de publication de la demande: 12.10.2005
(73) Titulaire: S.N.R. ROULEMENTS, F-74010 Annecy Cedex (FR)
(72) Inventeur: Idelon, Christophe, 74330 Poisy (FR); Dupont, Jean-Pierre, 74150 Val de Fier (FR)
(74) Mandataire: Novagraaf Technologies

(56) Documents cités:
- EP-A- 0 125 718
- EP-A- 0 800 011
- WO-A-94/04379
- WO-A-99/53209
- JP-A- 9 072 344
- US-A- 4 226 485
- US-A1- 2002 164 102

## Description

L'invention concerne un montage de palier à roulement comprenant une fusée mobile en rotation sur laquelle est emmanché un roulement.

Dans un exemple particulier, la fusée est destinée à être solidarisée à une roue d'un véhicule, par exemple ferroviaire, et le montage fait partie de la boîte d'essieu dudit véhicule.

En fonctionnement sous charge d'un tel montage, il est connu d'observer une corrosion de contact (fretting corrosion) à l'interface entre les différentes pièces le composant. En particulier, le roulement est classiquement immobilisé axialement au moyen d'une entretoise au niveau de laquelle la corrosion de contact est particulièrement susceptible de se former.

Cette corrosion est notamment provoquée par le fléchissement de la fusée qui, combiné à la rotation, crée des micro déplacements de l'entretoise et donc une usure à l'interface entre l'entretoise et les pièces en contact avec elle.

Pour tenter de réduire l'apparition de la corrosion de contact, le document EP-0 125 718 propose de pratiquer un revêtement de surface sur les pièces en contact. Mais cette réalisation, outre qu'elle nécessite une opération supplémentaire dans la fabrication des pièces, ne donne pas entièrement satisfaction du point de vue de la limitation de l'apparition de la corrosion de contact.

On connaît par ailleurs, notamment du document WO-94/04379, l'utilisation d'une pièce intermédiaire réalisée dans un matériau adapté qui est interposée entre les surfaces en contact. Mais cette réalisation, en prévoyant une pièce supplémentaire, complique et alourdit le montage tout en étant d'une efficacité limitée.

L'invention vise notamment à remédier au problème de corrosion de contact dans un montage sans utiliser de pièce supplémentaire ni de traitement spécifique des surfaces en contact. Pour ce faire, l'invention propose d'intégrer à l'entretoise un moyen de diminution de la corrosion de contact de sorte à permettre une déformation contrôlée de ladite entretoise lors de la rotation sous charge de la fusée. Ainsi, en limitant les micro déplacements de l'entretoise, l'invention permet de diminuer de façon particulièrement simple et efficace l'apparition de corrosion de contact au niveau de ladite entretoise.

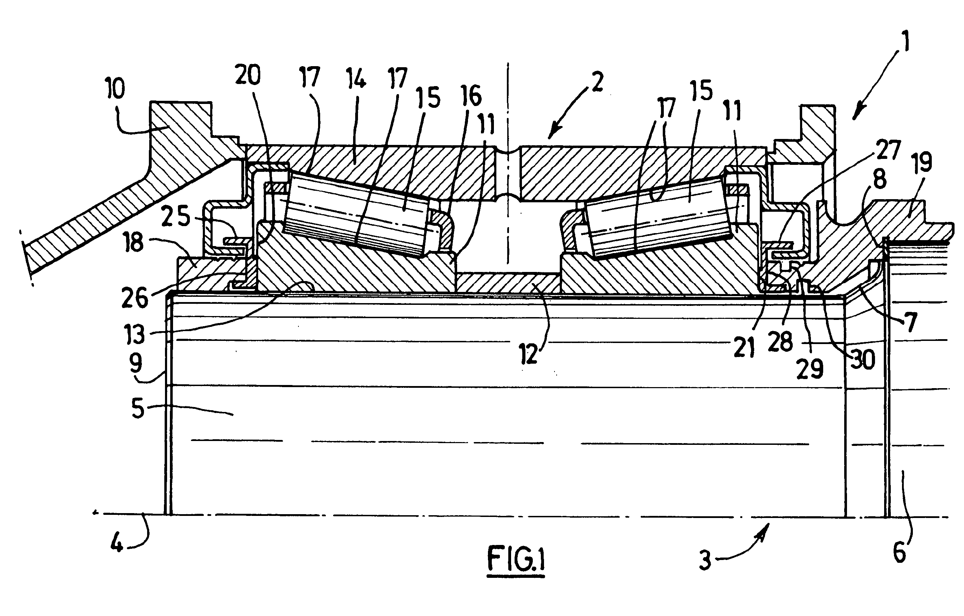

A cet effet, l'invention propose un montage de palier à roulement comprenant une fusée mobile en rotation qui est destinée à être solidaire d'une roue d'un véhicule, ladite fusée comprenant une paroi externe sur laquelle est emmanchée au moins une bague intérieure d'un roulement, ledit roulement comprenant en outre au moins une bague extérieure et des corps roulants disposés entre lesdites bagues de sorte à permettre leur rotation relative, ledit roulement étant immobilisé axialement sur la paroi au moyen d'au moins une entretoise rigide qui est emmanchée sur une portée de ladite paroi, une face latérale de l'entretoise formant butée axiale pour une bague intérieure, ladite entretoise intégrant un moyen de diminution de la corrosion de contact, ledit moyen comprenant au moins un usinage réalisé dans l'entretoise, voir JP-A-09-72 344 (fig. 1 et 4). L'invention est caractérisée par le fait que ledit usinage est agencé pour diminuer la rigidité structurelle de ladite entretoise de sorte à permettre, au moins au niveau de la face latérale, la flexion de ladite entretoise lors de la rotation en charge de la fusée.

Dans un mode de réalisation, au moins un usinage est formé d'une rainure qui est réalisée sur la surface extérieure de l'entretoise.

Par ailleurs, au moins un usinage peut s'étendre radialement à l'arrière de la paroi, dans une zone essentiellement axiale de l'entretoise.

En variante, éventuellement complémentaire, au moins un usinage s'étend axialement à l'arrière de la paroi, dans une zone essentiellement radiale de l'entretoise.

D'autres objets et avantages de l'invention apparaîtront au cours de la description qui suit, faite en référence aux dessins annexés, dans lesquels :
- la figure 1 est une représentation partielle en coupe transversale du montage selon l'invention dans lequel un roulement est immobilisé axialement par deux entretoises sur une fusée mobile en rotation, l'entretoise arrière comprenant, sur une première zone essentiellement axiale, un premier usinage radial externe et un deuxième usinage radial interne décalés axialement ;

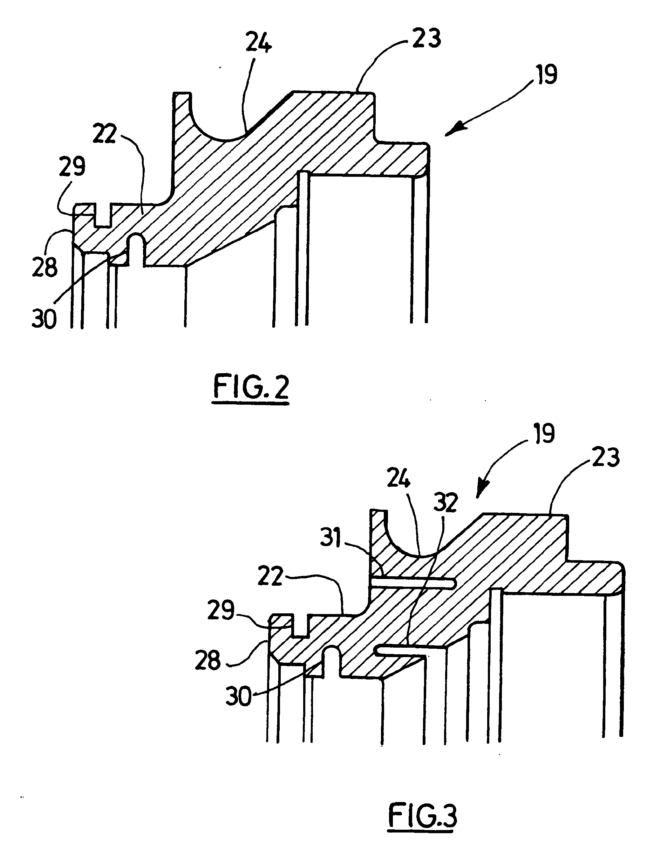

- la figure 2 est une représentation partielle en coupe transversale de l'entretoise arrière de la figure 1 ;
- la figure 3 est une représentation partielle en coupe transversale d'une entretoise arrière d'un montage selon un autre mode de réalisation, l'entretoise arrière comprenant, sur une première zone essentiellement axiale, un premier usinage radial externe et un deuxième usinage radial interne et, sur une zone intermédiaire essentiellement radiale, un premier usinage axial avant et un deuxième usinage axial arrière décalés radialement.

En relation avec la figure 1, on décrit un montage 1 de palier à roulement comprenant une fusée 3 mobile en rotation autour de son axe 4.

La fusée 3 se présente sous la forme générale d'une pièce de révolution d'axe 4 comprenant une première portion cylindrique 5 et une deuxième portion cylindrique 6 coaxiale à la première 5 et dont le diamètre est supérieur au diamètre de la première portion 5. Un congé de raccordement 7 est réalisé entre les première 5 et deuxième 6 portions de sorte que la fusée présente un épaulement 8.

L'extrémité libre 9 de la première portion 5 est destinée à être solidaire d'une roue non représentée d'un véhicule notamment ferroviaire.

Dans la suite de la description, les termes « axial » et « radial » ou « latéral » font référence à des plans respectivement parallèle et perpendiculaire à l'axe 4. Par ailleurs, les termes « interne » ou « intérieur » et « externe » ou « extérieur » font référence à des plans axiaux situés respectivement à proximité et à distance de l'axe 4. Enfin, les termes « avant » et « arrière » feront référence à des plans radiaux situés respectivement du côté de la roue, à savoir du côté gauche sur les figures, et du côté opposé à la roue, à savoir du côté droit sur les figures.

Le montage comprend également un roulement 2 permettant d'assurer la rotation de la fusée 3 par rapport à une structure fixe telle qu'un châssis 10. Sur la figure 1, le roulement 2 comprend deux bagues intérieures 11 adjacentes, une bague intérieure arrière et une bague intérieure avant séparée l'une de l'autre par une entretoise 12, lesdites bagues étant emmanchée sur la paroi externe 13 de la première portion 5 de la fusée 3. Le roulement 2 comprend en outre une bague extérieure 14 solidaire du châssis 10 et deux rangées de corps roulants coniques 15, maintenus à équidistance par une cage 16, prévues entre les bagues intérieures 11 et la bague extérieure 14 pour permettre leur rotation relative. Chaque bague 11, 14 est alors pourvue d'un chemin de roulement oblique 17 agencé pour recevoir les corps roulants 15 respectivement entre la bague intérieure 11 arrière et la bague extérieure 14 et entre la bague intérieure 11 avant et la bague extérieure 14.

Toutefois, la description réalisée en relation avec ce mode de réalisation est directement transposable à d'autre type de roulement, notamment à un roulement 2 comprenant une bague intérieure 11 sur laquelle les deux chemins de roulement 17 sont réalisés ou à un roulement 2 comprenant deux bagues extérieures 14 comprenant chacune un chemin de roulement 17.

Pour immobiliser axialement le roulement 2 sur la paroi 13 de la fusée 3, une entretoise est prévue pour former butée axiale pour chaque bague intérieure 11 du roulement 2. Ainsi, une entretoise avant 18 rigide est emmanchée sur une portée avant de la paroi 13 de la première portion 5 et une entretoise arrière 19 rigide est emmanchée sur une portée arrière de la fusée 3, les entretoises avant 18 et arrière 19 étant prévues en regard des parois latérales opposées des bagues intérieures 11, à savoir respectivement la paroi latérale avant 20 de la bague intérieure 11 avant et la paroi latérale arrière 21 de la bague intérieure arrière 11.

Compte tenu de la forme de la fusée 3 et afin d'assurer une immobilisation convenable, on utilise une entretoise arrière 19 habituelle, représentée sur les figures 2 et 3, qui comprend une première zone essentiellement axiale 22 emmanchée sur la première portion 5 et une deuxième zone 23 essentiellement axiale emmanchée sur la deuxième portion 6. Les première 22 et deuxième 23 zones sont reliées par une zone intermédiaire 24 essentiellement radiale s'étendant au dessus et à distance du congé de raccordement 7 et venant un butée contre l'épaulement 8.

Dans le mode de réalisation représenté sur la figure 1, le montage 1 comprend en outre un premier déflecteur 25 qui est interposé entre la bague intérieure 11 avant et la face latérale 26 de l'entretoise avant 18 et un deuxième déflecteur 27 qui est interposé entre la bague intérieure 11 arrière et la face latérale 28 de l'entretoise arrière 19. De ce fait, les faces latérales 16, 28 des entretoises 18, 19 exercent un appui sur les parois latérales 20, 21 des bagues intérieures 11 correspondantes par l'intermédiaire des premier 25 et deuxième 27 déflecteurs de sorte à assurer leur fonction de butée axiale.

En variante non représentée, on peut prévoir qu'un seul déflecteur soit interposé soit entre la bague intérieure 11 avant et l'entretoise 18 avant soit entre la bague intérieure 11 arrière et l'entretoise arrière 19. Dans d'autres modes de réalisation, le montage peut être dépourvu de déflecteur, les faces latérales 26, 28 des entretoises 18, 19 étant alors directement en contact avec les bagues intérieures 11.

Or, le serrage des entretoises 18, 19 sur la fusée 3 engendre une déformation des entretoises dont les faces latérales 26, 28 ne sont plus parallèles aux parois latérales des déflecteurs 25, 27 et des bagues intérieures 11. Une telle déformation génère des surpressions aux interfaces entre les entretoises 18, 19 et les déflecteurs 25, 27 et entre les déflecteurs 25, 27 et les bagues intérieures 11. Et, sous l'effet d'une charge radiale induite lors de la rotation de la roue, la fusée 3 fléchit provoquant des surpressions aux interfaces précitées et un décollement diamétralement opposé. Les micro-déplacements apparaissent alors au niveau des interfaces. Ce sont ces phénomènes qui sont à l'origine de la corrosion de contact.

Selon l'invention, afin de remédier à cette corrosion de contact, des moyens de diminution de la corrosion de contact sont intégrés aux entretoises. Etant placée à distance du point d'application de la charge radiale, l'entretoise arrière 19 est particulièrement sujette à cette corrosion de contact. Par conséquent, sur les figures, seule l'entretoise arrière 19 intègre un moyen de diminution de la corrosion de contact.

Ces moyens comprennent des usinages réalisés dans l'entretoise 19. Les usinages sont agencés pour diminuer la rigidité structurelle de l'entretoises 19 de sorte à permettre, au moins au niveau de sa face latérale 28, la flexion de l'entretoise 19 lors de la rotation en charge de la fusée 3.

Sur les figures 1 et 2, l'entretoise arrière comprend, sur sa première zone 22, un premier usinage radial externe 29 et un deuxième usinage radial interne 30 décalés axialement.

Dans un autre mode de réalisation représenté sur la figure 3, outre le premier usinage radial externe 29 et le deuxième usinage radial interne 30, l'entretoise arrière 19 comprend, sur la zone intermédiaire 24, un premier usinage axial avant 31 et un deuxième usinage axial arrière 32, décalés radialement.

Les usinages 29, 30, 31 et 32 réalisés sont définis à l'aide de calculs par éléments finis de manière à optimiser le comportement mécanique de l'entretoise 19 et ainsi supprimer les effets des phénomènes précités.

En particulier, la forme, la quantité et la position des usinages 29, 30, 31 et 32 sont définis pour conserver un contact satisfaisant entre les bagues intérieures, le déflecteur 27 et l'entretoise 19, pour uniformiser la pression de contact et pour supporter les efforts d'emmanchement et de désemmanchement du roulement 2 sur la fusée 3.

En outre, selon l'invention, l'entretoise 19, le déflecteur 27 et la fusée 3, c'est-à-dire les pièces en contact et susceptibles de présenter une corrosion de contact, peuvent être réalisées en matériau classiquement utilisé tel que l'acier sans nécessiter de traitement surfacique spécifique.

## Revendications

1. Montage (1) de palier à roulement comprenant une fusée (3) mobile en rotation qui est destinée à être solidaire d'une roue d'un véhicule, ladite fusée comprenant une paroi externe (13) sur laquelle est emmanchée au moins une bague intérieure (11) d'un roulement (2), ledit roulement comprenant en outre au moins une bague extérieure (14) et des corps roulants (15) disposés entre lesdites bagues de sorte à permettre leur rotation relative, ledit roulement étant immobilisé axialement sur la paroi (13) au moyen d'au moins une entretoise rigide (19) qui est emmanchée sur une portée de ladite paroi, une face latérale (28) de l'entretoise (19) formant butée axiale pour une bague intérieure (11), l'entretoise (19) intègrant un moyen de diminution de la corrosion de contact, ledit moyen comprenant au moins un usinage (29, 30, 31, 32) réalisé dans l'entretoise (19), ledit montage étant **caractérisé en ce que** ledit usinage est agencé pour diminuer la rigidité structurelle de ladite entretoise de sorte à permettre, au moins au niveau de la face latérale (28), la flexion de ladite entretoise lors de la rotation en charge de la fusée (3).

2. Montage selon la revendication 1, **caractérisé en ce qu'**au moins un usinage (29, 30, 31, 32) est formé d'une rainure qui est réalisée sur la surface extérieure de l'entretoise (19).

3. Montage selon la revendication 1 ou 2, **caractérisé en ce qu'**au moins un usinage (29, 30, 31, 32) s'étend radialement à l'arrière de la paroi (13), dans une zone essentiellement axiale (22) de l'entretoise (19).

4. Montage selon la revendication 3, **caractérisé en ce qu'**il comprend un premier usinage radial externe (29) et un deuxième usinage radial interne (30), lesdits usinages étant décalés axialement.

5. Montage selon l'une quelconque des revendications 1 à 4, **caractérisé en ce qu'**au moins un usinage (29, 30, 31, 32) s'étend axialement à l'arrière de la paroi (13), dans une zone essentiellement radiale (24) de l'entretoise (19).

6. Montage selon la revendication 5, **caractérisé en ce qu'**il comprend un premier usinage axial avant (31) et un deuxième usinage axial arrière (32), lesdits usinages étant décalés radialement.

7. Montage selon l'une quelconque des revendications 1 à 6, **caractérisé en ce qu'**il comprend en outre un déflecteur (27) qui est interposé entre la bague intérieure (11) et la face latérale (28) de l'entretoise (19), ladite face exerçant un appui sur une paroi latérale (21) de ladite bague intérieure par l'intermédiaire dudit déflecteur de sorte à assurer sa fonction de butée axiale.

8. Montage selon l'une quelconque des revendications 1 à 7, **caractérisé en ce qu'**il comprend deux bagues intérieures (11) adjacentes, une entretoise (18, 19) étant prévue pour former butée axiale pour chaque bague intérieure (11), lesdites entretoises étant prévues en regard des parois latérales (20, 21) opposées des bagues intérieures (11).

9. Montage selon la revendication 8, **caractérisé en ce que** seule l'entretoise arrière (19) intègre un moyen de diminution de la corrosion de contact.

## Claims

1. Roller bearing assembly (1) comprising a journal (3) mobile in rotation which is intended to be integral with a wheel of a vehicle, said journal comprising an outer wall (13) whereon is press fitted at least one inner ring (11) of a bearing (2), said bearing further comprising at least one outer ring (14) and rolling bodies (15) arranged between said rings in such a way as to allow for their relative rotation, said bearing being axially immobilised on the wall (13) by means of at least one rigid spacer (19) which is press fitted on a surface of said wall, a lateral surface (28) of the spacer (19) forming an axial stop for an inner ring (11), the spacer (19) incorporating means for reducing the fretting corrosion, said means comprising at least one machining (29, 30, 31, 32) made in the spacer (19), said assembly being **characterised in that** said machining is arranged to reduce the structural rigidity of said spacer in such a way as to allow for, at least on the lateral surface (28), the bending of said spacer during the rotation in charge of the journal (3).

2. Assembly according to claim 1, **characterised in that** at least one machining (29, 30, 31, 32) is formed of a groove which is made on the outer surface of the spacer (19).

3. Assembly according to claim 1 or 2, **characterised in that** at least one machining (29, 30, 31, 32) extends radially to the rear of the wall (13), in a substantially axial area (22) of the spacer (19).

4. Assembly according to claim 3, **characterised in that** it comprises a first external radial machining (29) and a second internal radial machining (30), said machinings being axially offset.

5. Assembly according to any of claims 1 to 4, **characterised in that** at least one machining (29, 30, 31, 32) extends axially to the rear of the wall (13), in a substantially radial area (24) of the spacer (19).

6. Assembly according to claim 5, **characterised in that** it comprises a first front axial machining (31) and a second rear axial machining (32), with said machinings being radially offset.

7. Assembly according to any of claims 1 to 6, **characterised in that** it further comprises a deflector (27) which is inserted between the inner ring (11) and the lateral surface (28) of the spacer (19), said surface pressing against a lateral wall (21) of said inner ring by the intermediary of said deflector in such a way as to provide its axial stop function.

8. Assembly according to any of claims 1 to 7, **characterised in that** it comprises two adjacent inner rings (11), a spacer (18, 19) being provided in order to form an axial stop for each inner ring (11), said spacers being provided across from the lateral walls (20, 21) opposite the inner rings (11).

9. Assembly according to claim 8, **characterised in that** only the rear spacer (19) incorporates a means for reducing the fretting corrosion.

## Patentansprüche

1. Montage (1) eines Wälzlagers umfassend einen beweglichen in Drehung befindlichen Zapfen (3), der dazu bestimmt ist, mit einem Rad eines Fahrzeugs fest verbunden zu sein, wobei der Zapfen eine äußere Wand (13) umfasst, auf die mindestens ein Innenring (11) eines Lagers (2) eingepresst ist, wobei das Lager ferner mindestens einen Außenring (14) und Rollkörper (15) umfasst, die zwischen den Ringen derart angeordnet sind, dass ihre relative Drehung möglich ist, wobei das Lager axial an der Wand (13) mit Hilfe mindestens eines steifen Stegs (19) immobilisiert ist, der an einer Fläche der Wand eingepresst ist, wobei eine Seitenwand (28) des Stegs (19) einen axialen Anschlag für den Innenring (11) bildet, wobei der Steg (19) ein Mittel zur Minderung der Kontaktkorrosion beinhaltet, wobei das Mittel mindestens eine in dem Steg (19) durchgeführte Bearbeitung (29, 30, 31, 32) umfasst, wobei die Montage **dadurch gekennzeichnet ist, dass** die Bearbeitung angelegt ist, die strukturelle Steifheit des Stegs zu verringern, um so die Biegung des Stegs während der Drehung unter Last des Zapfens (3) zumindest im Bereich der Seitenwand (28) zu ermöglichen.

2. Montage nach Anspruch 1, **dadurch gekennzeichnet, dass** mindestens eine Bearbeitung (29, 30, 31, 32) aus einer an der äußeren Oberfläche des Stegs (19) angebrachten Rille besteht.

3. Montage nach Anspruch 1 oder 2, **dadurch gekennzeichnet, dass** mindestens eine Bearbeitung (29, 30, 31, 32) sich radial an der Rückseite der Wand (13) in einem im Wesentlichen axialen Bereich (22) des Stegs (19) erstreckt.

4. Montage nach Anspruch 3, **dadurch gekennzeichnet, dass** sie eine erste äußere radiale Bearbeitung (29) und eine zweite innere radiale Bearbeitung (30) umfasst, wobei die Bearbeitungen axial versetzt sind.

5. Montage nach einem beliebigen der Ansprüche 1 bis 4, **dadurch gekennzeichnet, dass** mindestens eine Bearbeitung (29, 30, 31, 32) sich axial an der Rückseite der Wand (13) in einem im Wesentlichen radialen Bereich (24) des Stegs (19) erstreckt.

6. Montage nach Anspruch 5, **dadurch gekennzeichnet, dass** sie eine erste vordere axiale Bearbeitung (31) und eine zweite hintere axiale Bearbeitung (32) umfasst, wobei die Bearbeitungen radial versetzt sind.

7. Montage nach einem beliebigen der Ansprüche 1 bis 6, **dadurch gekennzeichnet, dass** sie ferner eine Ablenkfläche (27) umfasst, die zwischen dem Innenring (11) und der Seitenwand (28) des Stegs (19) angebracht ist, wobei die Seite die Seitenwand (21) des Innenrings mit Hilfe der besagten Ablenkfläche stützt, so dass ihre Funktion als axialer Anschlag gewährleistet ist.

8. Montage nach einem beliebigen der Ansprüche 1 bis 7, **dadurch gekennzeichnet, dass** sie zwei benachbarte Innenringe (11), einen Steg (18, 19) umfasst, der dafür vorgesehen ist, den axialen Anschlag für jeden Innenring (11) zu bilden, wobei die Stege gegenüber den Innenringen (11) im Bezug zu den Seitenwänden (20, 21) vorgesehen sind.

9. Montage nach Anspruch 8, **dadurch gekennzeichnet, dass** nur der hintere Steg (19) ein Mittel zur Verringerung der Kontaktkorrosion integriert.
